# EUROPÄISCHE PATENTSCHRIFT

(11) **EP 1 048 511 B1**
(45) Veröffentlichungstag und Bekanntmachung des Hinweises auf die Patenterteilung: **16.03.2005**
(21) Anmeldenummer: 00106678.6
(22) Anmeldetag: 29.03.2000
(51) Int. Cl.: B60N 2/36

(54) **Beschlag für einen Fahrzeugsitz**
Fitting for vehicle seats
Ferrure pour sièges de véhicules

(30) Priorität: 26.04.1999 DE 19918785
(43) Veröffentlichungstag der Anmeldung: 02.11.2000
(73) Patentinhaber: KEIPER GmbH & Co. KG, 67657 Kaiserslautern (DE)
(72) Erfinder: Bertram, Klaus Dieter, 42859 Remscheid (DE); Rabbach, Andreas, 42697 Solingen (DE); Vomberg, Ralf, 45481 Mülheim (DE)
(74) Vertreter: Patentanwälte Hosenthien-Held und Dr. Held

(56) Entgegenhaltungen:
- EP-A- 0 381 559
- FR-A- 2 484 809
- GB-A- 2 251 183
- US-A- 5 393 116

## Beschreibung

Die Erfindung betrifft einen Beschlag für einen Fahrzeugsitz, insbesondere einen Lehnenklapper für eine Kraftfahrzeug-Rücksitzbank, mit den Merkmalen des Oberbegriffs des Anspruches 1 und einen Fahrzeugsitz mit den Merkmalen des Oberbegriffs des Anspruches 10.

Aus der GB 2 251 183 B ist ein Beschlag dieser Art bekannt, der auf beiden Seiten einer Rücksitzbank in einem Kraftfahrzeug als hinterer Fuß vorgesehen ist. Zur Vergrößerung der Ladefläche des Kraftfahrzeuges kann nach dem Vorklappen der Rückenlehne der Rücksitzbank der Beschlag von der Fahrzeugstruktur des Kraftfahrzeuges gelöst werden und die Rücksitzbank als Ganzes nach vorne in eine aufrechte Packagestellung geklappt werden. Verlängerte Arme der Sperrklinke und des Sicherungshebels sorgen dafür, daß die Rückenlehne erst wieder zurückgeklappt werden kann, wenn der Beschlag wieder mit der Fahrzeugstruktur verriegelt ist.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche. Ein erfindungsgemäßer Fahrzeugsitz mit einem erfindungsgemäßen Beschlag ist Gegenstand des Anspruches 10.

Dadurch, daß eine zusätzliche Sicherungsvorrichtung für das Oberteil vorgesehen ist, die von der Sperrklinke und dem Sicherungshebel als einer ersten Sicherungsvorrichtung für das Oberteil in der Packagestellung unabhängig ist, werden in der Packagestellung, in welcher der Fahrzeugsitz zusammengeklappt und als Ganzes platzsparend hochgeklappt (hochgeschwenkt) ist, Klappergeräusche vermieden, wie sie sonst auftreten können, wenn das Oberteil und der Sicherungshebel aneinander stoßen. Außerdem kann der Fahrzeugsitz in eine Tischstellung gebracht werden, in welcher die Rückseite der dann waagrecht angeordneten Rückenlehne als Ladefläche benutzt werden kann, und welche durch die zusätzliche Sicherungsvorrichtung gesichert wird.

In einer bevorzugten Ausführungsform, die mit wenigen zusätzlichen Teilen auskommt und deshalb einfach und kostengünstig herzustellen ist, umfaßt die zusätzliche Sicherungsvorrichtung eine Koppelstange zwischen Oberteil und Unterteil sowie eine Feder, welche an der Koppelstange angreift. Die Koppelstange weist vorzugsweise ein Langloch auf, welches als Kulisse einen Bolzen umschließt. Das Langloch ist vorzugsweise mit einem langen Schenkel und einem quer dazu angeordneten kurzen Schenkel versehen, wobei letzterer als Raste für den Bolzen dient. Wenn der Bolzen im kurzen Schenkel des Langlochs zu liegen kommt, hält die Feder ihn darin fest, wodurch das Oberteil verriegelt ist.

Der erfindungsgemäße Beschlag wird vorzugsweise bei Rücksitzbänken in Kraftfahrzeugen eingesetzt, kann aber beispielsweise auch für den Beifahrersitz oder in anderen Fahrzeugen verwendet werden.

Im folgenden ist die Erfindung anhand eines in der Zeichnung dargestellten Ausführungsbeispiels näher erläutert. Es zeigen
- Fig. 1: einen Ansicht der Außenseite des linken, erfindungsgemäßen Beschlags in der Sitzstellung des Fahrzeugsitzes,
- Fig. 2: eine Ansicht der Innenseite des Beschlags aus Fig. 1,
- Fig. 3: eine Ansicht des Beschlags aus Fig. 1 in der Packagestellung des Fahrzeugsitzes,
- Fig. 4: eine Ansicht der linken Seite des erfindungsgemäßen Fahrzeugsitzes in einer Stellung zwischen Sitzstellung und Packagestellung.

Eine Rücksitzbank 1 für ein Kraftfahrzeug ist mit zwei vorderen Füßen 3 in Fahrtrichtung vorne an der Fahrzeugstruktur 5 des Kraftfahrzeugs angelenkt. In Fahrtrichtung hinten weist die Rücksitzbank 1 auf beiden Seiten jeweils als Beschlag einen nachfolgend näher beschriebenen Lehnenklapper 7 auf. Jeder Lehnenklapper 7 umfaßt ein Unterteil 9, welches als hinterer Fuß der Rücksitzbank 1 ausgebildet ist, und ein relativ zum Unterteil 9 um einen Achsbolzen 11 verdrehbares Oberteil 13, an welchem die Rückenlehne 15 der Rücksitzbank 1 befestigt ist. In einer Gebrauchs- oder Sitzstellung der Rücksitzbank 1 sind die Unterteile 9 auf beiden Seiten mit der Fahrzeugstruktur 5 verriegelt und die Rückenlehne 15 in einer ungefähr aufrechten Stellung. Durch Vorklappen der Rückenlehne 15 und Entriegeln der Unterteile 9 kann die Rücksitzbank 1 als Ganzes um die Anlenkstellen der vorderen Füße 3 als Drehachse hochgeschwenkt werden in eine Nichtgebrauchs- oder Packagestellung. Dadurch vergrößert sich die Ladefläche hinter der Rücksitzbank 1.

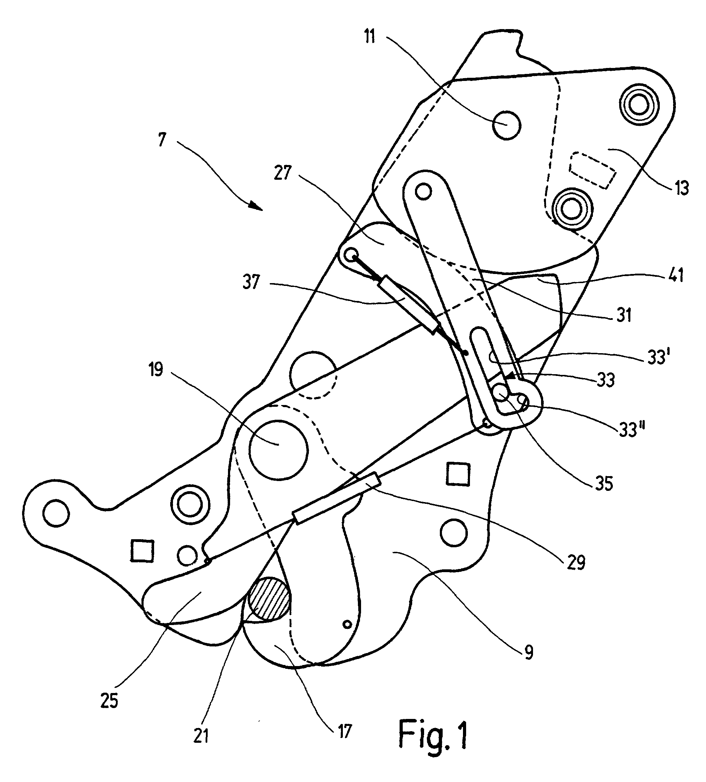

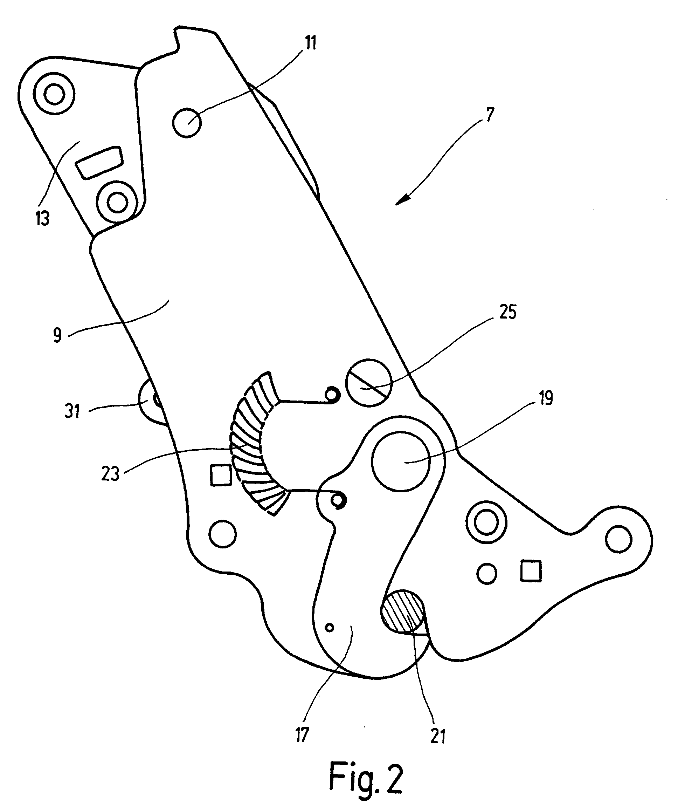

Jedes Unterteil 9 hat eine flache, aufrecht stehende Form. Zum Verriegeln des Unterteils 9 mit der Fahrzeugstruktur 5, wie in den Fig. 1 und 2 dargestellt, ist auf beiden Seiten des Unterteils 9 je eine Sperrklinke 17 auf einem gemeinsamen Klinkenbolzen 19 angebracht, der drehbar im Unterteil 9 gelagert ist. Dabei schließen das eine Aufnahme aufweisende Unterteil 9 und die maulförmig ausgebildeten, freien Enden der beiden Sperrklinken 17 zwischen sich einen Sperrbügel 21 oder Bolzen ein, der fest mit der Fahrzeugstruktur 5 verbunden ist und parallel zum Klinkenbolzen 19 verläuft. Auf der nach innen gewandten Seite des Unterteils 9 ist eine Schraubenknickfeder 23 (Gleichkraftfeder) mit ihrem einen Ende angebracht. Die Schraubenknickfeder 23 ist mit ihrem anderen Ende an der auf dieser Seite des Unterteils 9 angeordneten Sperrklinke 17 angebracht, wobei die Schraubenknickfeder 23 die Sperrklinke 17 in der verriegelten Stellung hält.

Auf der nach außen gewandten Seite des Unterteils 9 und der dort angeordneten Sperrklinke 17 ist auf dem Klinkenbolzen 19 ein zweiarmiger Sicherungshebel 25 drehbar gelagert. Mit seinem einen, kürzeren Arm liegt der Sicherungshebel 25 am Sperrbügel 21 auf der der Sperrklinke 17 gegenüberliegenden Seite an. Mit seinem anderen, längeren Arm ist der Sicherungshebel 25 unter einer Brücke 27 durchgefährt. Diese Brücke 27 ist parallel und im Abstand zum Unterteil 9 angeordnet und auf Zapfen am Unterteil 9 angebracht. Diese Zapfen begrenzen den Schwenkbereich des Sicherungshebels 25. Zwischen dem Sicherungshebel 25 und der Brücke 27 ist eine erste Zugfeder 29 angebracht. Diese erste Zugfeder 29 versucht den Sicherungshebel 25 so zu schwenken, daß er in Anlage an den Sperrbügel 21 gehalten wird.

Das Oberteil 13, welches in der gleichen Ebene wie der Sicherungshebel 25 und die auf dieser Seite vorgesehene Sperrklinke 17 angeordnet ist, kann in der beschriebenen Stellung des Sicherungshebels 25 an diesem vorbeischwenken. Der Schwenkbereich des Oberteils 13 wird nach hinten durch die Anlage eines Befestigungsansatzes für die Rückenlehne 13 an einer absatzartig ausgebildeten Stelle des Unterteils 9 und nach vorne durch die Anlage eines Materialvorsprungs an einer anderen absatzartig ausgebildeten Stelle das Unterteil 9 beschränkt.

An dem Oberteil 13 ist im Abstand zum Achsbolzen 11 ein Ende einer Koppelstange 31 angelenkt, deren anderes Ende ein L-förmiges Langloch 33 aufweist. Die Koppelstange 31 ist in einer Ebene senkrecht zum Achsbolzen 11 schwenkbar. Mit dem als Kulisse wirkenden Langloch 33 umschließt die Koppelstange 31 einen Bolzen 35 auf der Brücke 27. Der Bolzen 35 ist über die Brücke 27 fest mit dem Unterteil 9 verbunden und parallel zum Achsbolzen 11 angeordnet. Der Bolzen 35 ist gegenüber dem Achsbolzen 11 nach hinten und nach unten versetzt. In der nach hinten geschwenkten Stellung des Oberteils 13 befindet sich der Bolzen 35 in dem in Längsrichtung der Koppelstange 31 verlaufenden langen Schenkel 33' des Langlochs 33 in der Nähe des Übergangsbereichs zum senkrecht dazu verlaufenden kurzen Schenkel 33''. Eine zweite Zugfeder 37 ist zwischen der Koppelstange 31 und der Brücke 27 vorgesehen. Die zweite Zugfeder 37 zieht an der Koppelstange 31 so, daß das Oberteil 13 durch das von der Koppelstange 31 ausgeübte Moment nach hinten (in Fig. 1 im Uhrzeigersinn) gedrückt wird und der Übergangsbereich des Langlochs 33 zum Bolzen 35 hin gezogen wird. Die Anlenkstelle der Koppelstange 31 am Oberteil 13 befindet sich in Fahrtrichtung vor der Verbindungslinie von Achsbolzen 11 und Bolzen 35.

Um von der beschriebenen Sitzstellung in die Packagestellung überzugehen, wird zunächst die Rückenlehne 15 vorgeschwenkt. Jedes Oberteil 13 schwenkt dabei um den Achsbolzen 11 (in Fig. 1 gegen den Uhrzeigersinn). Das Oberteil 13 schiebt dabei zunächst die Koppelstange 31 nach unten, so daß das Ende des langen Schenkels 33' zum Bolzen 35 gelangt. Wenn die Anlenkstelle der Koppelstange 31 auf der Verbindungslinie zwischen Achsbolzen 11 und Bolzen 35 liegt und damit die Rückenlehne 15 schräg nach vorne geneigt ist, befindet sich der Bolzen 35 in seiner am weitesten vom kurzen Schenkel 33'' entfernten Position. Sobald die Anlenkstelle der Koppelstange 31 die Verbindungslinie zwischen Achsbolzen 11 und Bolzen 35 passiert hat, zieht das Oberteil 13 beim weiteren Schwenken die Koppelstange 31 wieder nach oben, und das Langloch 33 bewegt sich relativ zum Bolzen 35 in die andere Richtung, also mit dem Übergangsbereich zum kurzen Schenkel 33'' auf den Bolzen 35 zu. Im Ausführungsbeispiel ist die zweite Zugfeder 37 in Fahrtrichtung vor der Koppelstange 31 angeordnet und der kurze Schenkel 33'' steht vom langen Schenkel 33' nach hinten ab. Die Kraft der zweiten Zugfeder 37 hält daher diejenige Seite des langen Schenkels 33' in Anlage an den Bolzen 35, von welcher der kürzere Schenkel 33'' absteht. Sobald der Übergangsbereich des Langlochs 33 den Bolzen 35 erreicht hat, zieht die zweite Zugfeder 37 deshalb die Koppelstange 31 in der Richtung des kurzen Schenkels 33'' so heran, daß der Bolzen 35 in diesem als Raste wirkenden kurzen Schenkel 33'' zu liegen kommt und festgehalten wird, das Oberteil 13 also verriegelt ist. Die Abmessungen sind so gewählt, daß zugleich die Rükkenlehne 15 auf dem Sitzkissen 39 der Rücksitzbank 1 zu liegen kommt.

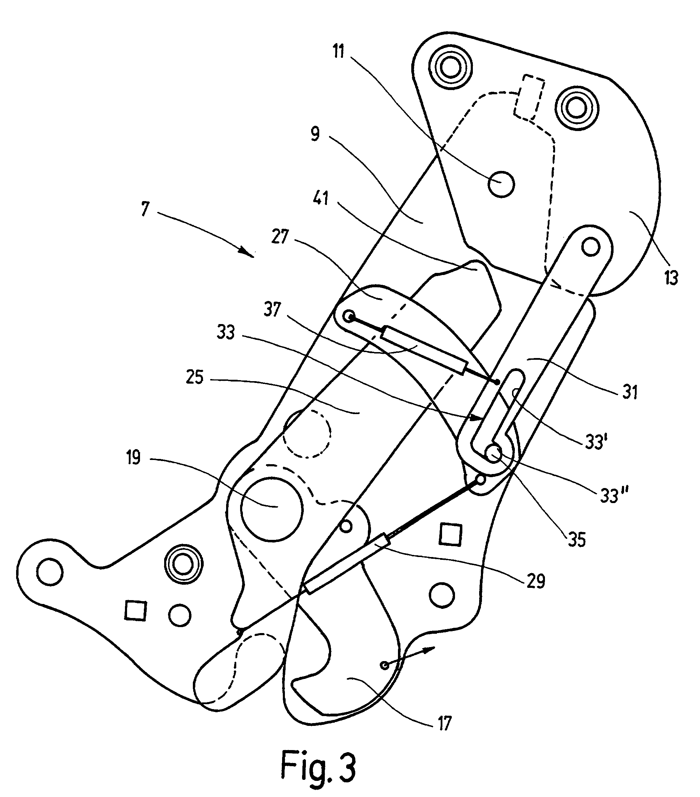

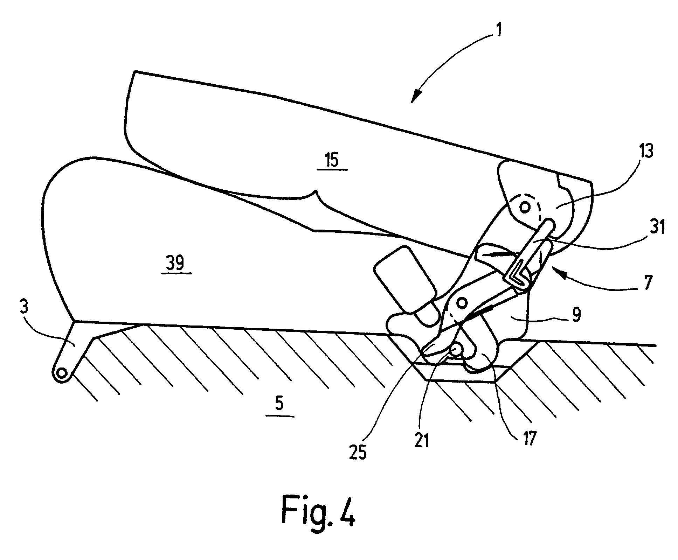

Nun wird auf jeder Seite das Unterteil 9 entriegelt. Hierzu werden, beispielsweise über einen Bowdenzug, die Sperrklinken 17 unter Biegen (Spannen) der Schraubenknickfeder 23, also gegen deren Kraft, nach hinten gezogen. Die Sperrklinken 17 geben dadurch den Sperrbügel 21 frei. Dieser Zustand ist in Fig. 4 dargestellt. Die Rücksitzbank 1 kann nun im hinteren Bereich angehoben werden, wodurch sich das Unterteil 9 vom Sperrbügel 21 löst. Der bisher in Anlage an den Sperrbügel 21 befindliche Sicherungshebel 25 schwenkt nun aufgrund der Kraft der ersten Zugfeder 29 in die gleiche Richtung wie zuvor die Sperrklinken 17. Der längere Arm des Sicherungshebels 25 schwenkt dabei in dem von der Brücke 27 zugelassenen Bereich nach vorne, bis er in Anlage an den die vordere Begrenzung bildenden Zapfen gelangt. Das Ende des längeren Arms des Sicherungshebels 25 weist eine Kontur 41 auf, die nunmehr so relativ zum Oberteil 13 angeordnet ist, daß das Oberteil 13 nicht mehr zurückgeschwenkt werden kann. Der Sicherungshebel 25 mit seiner Kontur 41 sichert daher die Rückenlehne 15 in ihrer vorgeschwenkten Stellung. Dieser Zustand ist in Fig. 3 dargestellt.

Die Rücksitzbank 1 wird nun durch Schwenken um die Anlenkstellen der vorderen Füße 3 vollständig nach oben in die Packagestellung geklappt. Sobald nicht mehr an den Sperrklinken 17 gezogen wird, bewirkt die Kraft jeder sich entspannenden Schraubenknickfeder 23, daß die Sperrklinken 17 wieder vorgeschwenkt werden. Das Oberteil 13 und damit die Rückenlehne 15 wird in dieser Packagestellung zum einen durch den Sicherungshebel 25 gesichert, zum anderen wirkt die Koppelstange 31 mit dem Bolzen 35 als zusätzliche Sicherungsvorrichtung, die insbesondere auch ein Klappern verhindert.

Um die Rücksitzbank 1 wieder in die Sitzstellung zu bringen, wird sie zunächst zurückgeschwenkt. Sobald auf jeder Seite die Sperrklinken 17 in Anlage an den Sperrbügel 21 gelangen, wird über eine im Bereich der Anlage vorhandene Konturschräge jeder Sperrklinke 17 die Sperrklinke 17 entgegen der Kraft der Schraubenknickfeder 23 nach hinten gedrückt. Durch die am kürzeren Arm vorhandene Konturschräge wird der Sicherungshebel 25 ebenfalls zur Seite gedrückt, aber nach vorne, entgegen der Kraft der ersten Zugfeder 29. Das Unterteil 9 kann nun in Anlage an den Sicherungsbügel 21 kommen. Nach dem Zurückschwenken der Sperrklinken 17 wird der Sicherungsbügel 21, wie oben beschrieben, wieder vom Unterteil 9 und den Sperrklinken 17 umschlossen, so daß das Unterteil 9 und damit die Rücksitzbank 1 wieder mit der Fahrzeugstruktur 5 verriegelt ist.

Um die Rückenlehne 15 zurückschwenken zu können, muß erst das Oberteil 13 entriegelt werden. Hierzu wird, beispielsweise über einen zusätzlichen Bowdenzug, die Koppelstange 31 so nach hinten gezogen, daß der Bolzen 35 im Übergangsbereich des Langlochs 33 zu liegen kommt. Nun kann das Oberteil 13 an der Kontur 41 des zurückgeschwenkten Sicherungshebels 25 vorbei nach hinten geschwenkt werden. Dabei bewegt sich das Langloch 33 relativ zum Bolzen 35 so, daß dieser sich innerhalb des langen Schenkels 33' befindet. Wenn die Anlenkstelle der Koppelstange 31 die Verbindungslinie zwischen Achsbolzen 11 und Bolzen 35 wieder überquert hat, ändert sich die Bewegungsrichtung des Langlochs 33 relativ zum Bolzen 35, entsprechend dem oben beschriebenen Fall der umgekehrten Schwenkbewegung des Oberteils 13. Mit der Änderung der Bewegungsrichtung des Langlochs 33, d.h. der Koppelstange 31 in Längsrichtung, unterstützt die zweite Zugfeder 37 die weitere Bewegung der Koppelstange 31. Wenn das Oberteil 13 mit seinem Befestigungsansatz in Anlage an das Unterteil 9 gelangt, ist die eingangs beschriebene Sitzstellung der Rücksitzbank 1 wieder erreicht.

Statt jeweils das Unterteil 9 zu entriegeln, kann die Rückenlehne 15 nach dem Vorklappen eine ungefähr waagrechte Tischstellung einnehmen. Die Rückseite der Rückenlehne 15 kann nun beladen werden. Die Sicherung über die Koppelstange 31 und den Bolzen 35 sorgt dafür, daß die Rückenlehne 15 nicht versehentlich zurückschwenkt.

### Bezugszeichenliste

- 1: Fahrzeugsitz, Rücksitzbank
- 3: vordere Füße
- 5: Fahrzeugstruktur
- 7: Beschlag, Lehnenklapper
- 9: Unterteil
- 11: Achsbolzen
- 13: Oberteil
- 15: Rückenlehne
- 17: Sperrklinke
- 19: Klinkenbolzen
- 21: Sperrbügel
- 23: Schraubenknickfeder
- 25: Sicherungshebel
- 27: Brücke
- 29: erste Zugfeder
- 31: Koppelstange
- 33: Langloch
- 33': langer Schenkel
- 33": kurzer Schenkel
- 35: Bolzen
- 37: zweite Zugfeder
- 39: Sitzkissen
- 41: Kontur

## Patentansprüche

1. Beschlag für einen Fahrzeugsitz, insbesondere Lehnenklapper für eine Kraftfahrzeug-Rücksitzbank, mit einem Unterteil (9), das in einer Sitzstellung des Fahrzeugsitzes (1) mittels wenigstens einer Sperrklinke (17) mit der Fahrzeugstruktur (5) verriegelbar ist, einem relativ zum Unterteil (9) verdrehbaren Oberteil (13), welches mit der Rückenlehne (15) des Fahrzeugsitzes (1) verbunden ist, und einem Sicherungshebel (25), welcher in einer Packagestellung des Fahrzeugsitzes (1) das Oberteil (13) sichert, **dadurch gekennzeichnet, daß** eine von der Sperrklinke (17) und dem Sicherungshebel (25) unabhängige, zusätzliche Sicherungsvorrichtung (31, 33'', 35) für das Oberteil (13) vorgesehen ist.

2. Beschlag nach Anspruch 1, **dadurch gekennzeichnet, daß** die zusätzliche Sicherungsvorrichtung (31, 33'', 35) eine Koppelstange (31) zwischen Oberteil (13) und Unterteil (9) umfaßt.

3. Beschlag nach Anspruch 2, **dadurch gekennzeichnet, daß** die zusätzliche Sicherungsvorrichtung (31, 33'', 35) eine Feder (37) aufweist, welche an der Koppelstange (31) angreift.

4. Beschlag nach Anspruch 2 oder 3, **dadurch gekennzeichnet, daß** die Koppelstange (31) ein Langloch (33) aufweist, welches als Kulisse einen Bolzen (35) umschließt.

5. Beschlag nach Anspruch 4, **dadurch gekennzeichnet, daß** die Koppelstange (31) am Oberteil (13) angelenkt ist und der Bolzen (35) fest mit dem Unterteil (9) verbunden ist.

6. Beschlag nach Anspruch 4 oder 5, **dadurch gekennzeichnet, daß** das Langloch (33) einen langen Schenkel (33') und einen quer dazu angeordneten kurzen Schenkel (33'') aufweist, welcher als Raste für den Bolzen (35) dient.

7. Beschlag nach Anspruch 3 und 6, **dadurch gekennzeichnet, daß** die Feder (37) den Bolzen (35) in Anlage an diejenige Seite des Langlochs (33) hält, von welcher der kurze Schenkel (33'') absteht.

8. Beschlag nach Anspruch 7, **dadurch gekennzeichnet, daß** die Feder (37) den Bolzen (35) im kurzen Schenkel (33'') festhält, wenn der Bolzen (35) im kurzen Schenkel (33'') zu liegen kommt.

9. Beschlag nach einem der Ansprüche 6 bis 8, **dadurch gekennzeichnet, daß** der Bolzen (35) am weitesten vom kurzen Schenkel (33'') entfernt ist, wenn die Rückenlehne (15) schräg nach vorne geneigt ist.

10. Fahrzeugsitz, insbesondere Kraftfahrzeug-Rücksitzbank, mit einem Beschlag nach einem der Ansprüche 1 bis 9.

## Claims

1. Fitting for a vehicle seat, in particular a backrest folding mechanism for a rear seat of a motor vehicle, having a lower member (9) which, when the vehicle seat (1) is in a seating position, can be locked to the vehicle structure (5) by means of at least one locking pawl (17), and having an upper member (13) which can be pivoted relative to the lower member (9) and which is connected to the backrest (15) of the vehicle seat (1), and having a securing lever (25) which, when the vehicle seat (1) is in a position for packages, secures the upper member (13), **characterised in that** there is provided for the upper member (13) an additional securing device (31, 33", 35) which is independent of the locking pawl (17) and the securing lever (25).

2. Fitting according to claim 1, **characterised in that** the additional securing device (31, 33", 35) comprises a coupling bar (31) between the upper member (13) and lower member (9).

3. Fitting according to claim 2, **characterised in that** the additional securing device (31, 33", 35) has a spring (37) which acts on the coupling bar (31).

4. Fitting according to claim 2 or 3, **characterised in that** the coupling bar (31) has an elongate hole (33) which in the form of a slotted member surrounds a pin (35).

5. Fitting according to claim 4, **characterised in that** the coupling bar (31) is articulated to the upper member (13) and the pin (35) is securely connected to the lower member (9).

6. Fitting according to claim 4 or 5, **characterised in that** the elongate hole (33) has a long limb (33') and a short limb (33"), which is arranged transversely relative to the long limb (33') and which acts as a locking means for the pin (35).

7. Fitting according to claims 3 and 6, **characterised in that** the spring (37) holds the pin (35) in abutment against that side of the elongate hole (33) from which the short limb (33") extends.

8. Fitting according to claim 7, **characterised in that** the spring (37) retains the pin (35) in the short limb (33") when the pin (35) comes to rest in the short limb (33").

9. Fitting according to any one of claims 6 to 8, **characterised in that** the pin (35) is furthest removed from the short limb (33") when the backrest (15) is inclined obliquely forwards.

10. Vehicle seat, in particular rear seat of a motor vehicle, having a fitting according to any one of claims 1 to 9.

## Revendications

1. Ferrure pour un siège de véhicule, en particulier un dossier rabattable pour une banquette arrière de véhicule automobile, comprenant une partie inférieure (9) qui peut être verrouillée à la structure (5) du véhicule dans une position d'assise du siège de véhicule (1) au moyen d'au moins un cliquet d'arrêt (17), une partie supérieure (13) que l'on peut faire tourner par rapport à la partie inférieure (9) et qui est reliée au dossier (15) du siège de véhicule (1), et un levier de sécurité (25) qui maintient la partie supérieure (13) dans une position d'espace bagages du siège de véhicule (1), **caractérisée par le fait qu'**il est prévu pour la partie supérieure (13) un dispositif de sécurité supplémentaire (31, 33", 35) indépendant du cliquet d'arrêt (17) et du levier de sécurité (25).

2. Ferrure selon la revendication 1, **caractérisée par le fait que** le dispositif de sécurité supplémentaire (31, 33'', 35) comprend une biellette (31) intercalée entre la partie supérieure (13) et la partie inférieure (9).

3. Ferrure selon la revendication 2, **caractérisée par le fait que** le dispositif de sécurité supplémentaire (31, 33'', 35) présente un ressort (37) qui attaque la biellette (31).

4. Ferrure selon l'une des revendications 2 ou 3, **caractérisée par le fait que** la biellette (31) présente un trou allongé (33) qui entoure un tourillon (35) à la façon d'une coulisse.

5. Ferrure selon la revendication 4, **caractérisée par le fait que** la biellette (31) est articulée à la partie supérieure (13), et le tourillon (35) est relié rigidement à la partie inférieure (9).

6. Ferrure selon l'une des revendications 4 ou 5, **caractérisée par le fait que** le trou allongé (33) présente une branche longue (33') et une branche courte (33") qui est disposée transversalement à la première et qui sert d'enclenchement pour le tourillon (35).

7. Ferrure selon les revendications 3 et 6, **caractérisée par le fait que** le ressort (37) maintient le tourillon (35) en appui contre le côté du trou allongé (33) qui est éloigné de la branche courte (33").

8. Ferrure selon la revendication 7, **caractérisée par le fait que** le ressort (37) maintient le tourillon (35) dans la branche courte (33") lorsque le tourillon (35) vient se placer dans la branche courte (33'').

9. Ferrure selon l'une des revendications 6 à 8, **caractérisée par le fait que** le tourillon (35) est éloigné au maximum de la branche courte (33'') lorsque le dossier (15) est incliné obliquement vers l'avant.

10. Siège de véhicule, en particulier banquette arrière de véhicule automobile, équipé d'une ferrure telle que définie à l'une des revendications 1 à 9.
